**Europäisches Patentamt**

**European Patent Office**

**Office européen des brevets**

(11) Veröffentlichungsnummer: **0 230 977**
**A2**

# EUROPÄISCHE PATENTANMELDUNG

(21) Anmeldenummer: 87100778.7

(22) Anmeldetag: 21.01.87

(51) Int. Cl.⁴: **B 01 D 19/04**
B 01 F 17/00, D 21 H 3/00

(30) Priorität: 23.01.86 DE 3601929

(43) Veröffentlichungstag der Anmeldung:
05.08.87 Patentblatt 87/32

(84) Benannte Vertragsstaaten:
AT BE CH DE ES FR GB IT LI NL SE

(71) Anmelder: **BASF Aktiengesellschaft**
**Carl-Bosch-Strasse 38**
**D-6700 Ludwigshafen (DE)**

(72) Erfinder: **Melzer, Jaroslav**
**Kirchenstrasse 116**
**D-6700 Ludwigshafen (DE)**

**Bergold, Wolfram, Dr.**
**Am Waldrand 26**
**D-6900 Heidelberg (DE)**

(54) Entschäumer aus Basis von Öl-in-Wasser-Emulsiionen.

(57) Die Erfindung betrifft Entschäumer auf Basis von Öl-in-Wasser-Emulsionen, bei denen die Ölphase der Emulsion (a) $C_{12}$- bis $C_{26}$-Alkohole, Destillationsrückstände, die bei der Herstellung von Alkoholen durch Oxosynthese oder nach dem Ziegler-Verfahren erhalten werden und/oder

(b) Fettsäureester von $C_{12}$- bis $C_{22}$-Carbonsäuren mit einem ein- bis dreiwertigen $C_1$- bis $C_{18}$-Alkohol und gegebenenfalls

(c) einen Kohlenwasserstoff mit einem Siedepunkt oberhalb von 200° C oder Fettsäuren mit 12 bis 22 Kohlenstoffatomen

enthält, zu 15 bis 50 Gew.% am Aufbau der Emulsion beteiligt ist, eine mittlere Teilchengröße von < 25 µm hat und nicht hydrophobisierte, feinteilige, praktisch wasserunlösliche inerte Feststoffe enthält.

EP 0 230 977 A2

**Beschreibung**

Entschäumer auf Basis von Öl-in-Wasser-Emulsionen

Aus der DE-PS 21 57 O33 ist ein Verfahren zum Entschäumen wäßriger Systeme mittels Emulsionen bekannt, die $C_{12}$- bis $C_{22}$-Alkanole und/oder $C_{12}$- bis $C_{22}$-Fettsäureester zwei- oder dreiwertiger Alkohole, sowie Paraffinöl und/oder $C_{12}$- bis $C_{22}$-Fettsäuren als Entschäumer sowie an sich bekannte Zusätze grenzflächenaktiver Stoffe als Emulgatoren enthalten. Die emulgierten wasserunlöslichen Stoffe haben eine mittlere Teilchengröße von 4 bis 9 µm. Die bekannten Entschäumer-Emulsionen haben den Nachteil, daß sie bei der Lagerung aufrahmen und zum Teil sogar so stark verdicken, daß solche Mischungen dann nicht mehr gepumpt werden können.

Aus der US-PS 34 O8 306 ist ein Verfahren zum Entschäumen von wäßrigen Systemen bekannt, bei dem man eine Entschäumermischung einsetzt, die aus 8O bis 97 Gew.-% einer wasserlöslichen hydrophoben organischen Flüssigkeit (z.B. Mineralöl, langkettige Alkohole, Ester oder Amine) und aus 3 bis 2O Gew.-% hydrophobierten feinteiligen Feststoffen (z.B. Kieselsäure, Bentonit, Talk oder Titandioxid) besteht. Die Entschäumermischung kann gegebenenfalls bis zu 5 Gew.-% eines oberflächenaktiven Mittels enthalten. Ein wesentliches Merkmal dieser Entschäumermischungen besteht darin, daß die feinteiligen Feststoffe mit Substanzen hydrophobiert werden (z.B. Dimethylpolysiloxanölen), die üblicherweise als Entschäumer verwendet werden. Die Herstellung hydrophobierter feinteiliger Feststoffe ist technisch aufwendig.

Aus der EP-Anmeldung 149 812 ist bekannt, Entschäumer auf Basis von Öl-in-Wasser-Emulsionen, bei denen die Ölphase der Emulsion (a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder

(b) einen Fettsäureester von $C_{12}$- bis $C_{22}$-Carbonsäuren mit einem ein- bis dreiwertigen $C_1$- bis $C_{18}$-Alkohol und gegebenenfalls

(c) einen Kohlenwasserstoff mit einem Siedepunkt oberhalb von 2OO°C oder Fettsäuren mit 12 bis 22 Kohlenstoffatomen

enthält, zu 15 bis 6O Gew.-% am Aufbau der Emulsion beteiligt ist und eine mittlere Teilchengröße von O,5 bis 15 µm hat, durch Zusatz von O,05 bis O,5 Gew.-% eines hochmolekularen, wasserlöslichen Homo- oder Copolymerisats von Acrylsäure, Methacrylsäure, Acrylamid oder Methacrylamid gegen Viskositätserhöhung und Aufrahmen bei der Lagerung zu stabilisieren.

Der Erfindung liegt die Aufgabe zugrunde, die bekannten Entschäumer unter weitgehender bzw. vollständiger Erhaltung der Wirksamkeit umweltfreundlicher zu gestalten, d.h. den chemischen Sauerstoffbedarf in Abwässern zu reduzieren.

Die Aufgabe wird erfindungsgemäß gelöst durch Entschäumer auf Basis von Öl-in-Wasser-Emulsionen, bei denen die Ölphase der Emulsionen (a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhältlich und die ggf. noch alkoxyliert sind und/oder

(b) einen Fettsäureester von $C_{12}$- bis $C_{22}$-Carbonsäuren mit einem ein- bis dreiwertigen $C_1$- bis $C_{18}$-Alkohol und gegebenenfalls

(c) einen Kohlenwasserstoff mit einem Siedepunkt oberhalb von 2OO°C oder Fettsäuren mit 12 bis 22 Kohlenstoffatomen

enthält, zu 5 bis 5O Gew.-% am Aufbau der Emulsion beteiligt ist und eine mittlere Teilchengröße von < 25 µm hat, wenn die Öl-in-Wasser-Emulsionen oberflächlich nicht hydrophobierte, feinteilige, praktisch wasserunlösliche inerte Feststoffe enthält.

Die Komponente (a) der Öl-in-Wasser-Emulsionen besteht vor allem aus natürlichen oder synthetischen Alkoholen mit 12 bis 26 Kohlenstoffatomen oder Alkoholgemischen. Beispiele sind Myristylalkohol, Cetylalkohol und Stearylalkohol. Die synthetischen Alkohole, die beispielsweise nach dem Ziegler-Verfahren durch Oxidation von Aluminiumalkylen erhältlich sind, sind gesättigte, geradkettige, unverzweigte Alkohle. Synthetische Alkohole werden auch durch Oxosynthese erhalten. Hierbei handelt es sich in der Regel um Alkoholgemische. Als Komponente (a) der Ölphase der Entschäumeremulsionen können außerdem Destillationsrückstände, die bei der Herstellung der vorstehend genannten Alkohole durch Oxosynthese oder nach dem Ziegler-Verfahren erhalten werden, verwendet werden. Als Bestandteil (a) der Ölphase der Entschäumeremulsionen eignen sich auch alkoxylierte Destillationsrückstände, die bei dem obengenannten Verfahren zur Herstellung von höheren Alkoholen durch Oxosynthese oder nach dem Ziegler-Verfahren herstellbar sind. Man erhält die oxalkylierten Destillationsrückstände dadurch, daß man die obengenannten Destillationsrück stände mit Ethylenoxid oder mit Propylenoxid oder auch mit einer Mischung aus Ethylenoxid und Propylenoxid umsetzt. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (b) der Ölphase der Entschäumer-Emulsion verwendet man Fettsäureester von $C_{12}$- bis $C_{22}$-Carbonsäuren mit einem ein- bis dreiwertigen $C_1$- bis $C_{18}$-Alkohol. Die Fettsäuren, die den Estern zugrundeliegen, sind beispielsweise Laurylsäure, Myristinsäure, Palmitinsäure, Stearinsäure, Arachinsäure und Behensäure. Vorzugsweise verwendet man Palmitinsäure- oder Stearinsäureester. Man kann einwertige $C_1$- bis $C_{18}$-Alkohole zur Veresterung der genannten Carbonsäuren verwenden, z.B. Methanol, Ethanol, Propanol, Butanol, Hexanol, Decanol und Stearylalkohol als auch zweiwertige Alkohole, wie Ethylenglykol oder dreiwertige Alkohole wie Glycerin. Die mehrwertigen Alkohole können vollständig oder teilweise verestert sein. Die Ölphase der Entschäumeremulsionen enthält eine Verbindung der Komponente (a) oder (b) der auch Mischungen aus den Komponenten (a) und (b).

Die Komponenten (a) und (b) können in jedem beliebigen Verhältnis zur Herstellung der Entschäumer verwendet werden. In der Praxis haben sich beispielsweise Mischungen aus (a) und (b) bewährt, die 40 bis 60 % (a) und 60 bis 40 Gew.-% (b) enthalten.

Die Ölphase der Emulsion kann zusätzlich noch von einer weiteren Klasse wasserunlöslicher Verbindungen gebildet werden, die im folgenden als Komponente (c) bezeichnet wird. Die Verbindungen der Komponente (c) können bis zu 50 Gew.-%, bezogen auf die Komponenten (a) und (b) am Aufbau der Ölphase der Entschäumeremulsionen beteiligt sein. Sie können entweder einer Mischung aus den Komponenten (a) und (b) oder jeder der unter (a) oder (b) genannten Verbindungen zugesetzt werden. Als Komponente (c) eignen sich Kohlenwasserstoffe mit einem Siedepunkt bei 1013 mbar von mehr als 200°C und einem Stockpunkt unter 0°C oder Fettsäuren mit 12 bis 22 Kohlenstoffatomen. Vorzugsweise eignen sich als Kohlenwasserstoffe Paraffinöle, wie die im Handel üblichen Paraffingemische, die auch als Weißöl bezeichnet werden.

Die vorstehend genannten Verbindungen (a) und/oder (b) sowie gegebenenfalls (c) bilden die Ölphase der Öl-in-Wasser-Emulsionen. Die Ölphase ist zu 5 bis 50 Gew.-% am Aufbau der Öl-in-Wasser-Emulsion beteiligt, während der Anteil der wäßrigen Phase am Aufbau der Öl-in-Wasser-Emulsionen 95 bis 50 Gew.-% beträgt, wobei sich die Gewichtsprozente jeweils zu 100 addieren. Die mittlere Teilchengröße der Ölphase der Öl-in-Wasser-Emulsion liegt unterhalb von 25 μm und beträgt vorzugsweise 0,5 bis 15 μm.

Das wesentliche Merkmal der vorliegenden Erfindung besteht darin, daß die Ölphase der Öl-in-Wasser-Emulsionen oberflächlich nicht hydrophobierte, feinteilige, praktisch wasserunlösliche inerte Feststoffe enthält. Der Teilchendurchmesser der feinteiligen, praktisch wasserunlöslichen inerten Feststoffe liegt unterhalb von 20 μm, vorzugsweise in dem Bereich von 0,1 bis 10 μm. Die erfindungsgemäßen Entschäumer können auch dadurch hergestellt werden, daß man die feinteiligen inerten Feststoffe in einen bekannten Öl-in-Wasser-Entschäumer einemulgiert, z.B. in eine Emulsion der Verbindungen (a) und/oder (b) und gegebenenfalls (c) in Wasser. Für die erfindungsgemäßen Entschäumer kann man sämtliche inerten Feststoffe verwenden, die mit den Komponenten der Entschäumermischung nicht reagieren und die auch praktisch in Wasser unlöslich sind. Vorzugsweise verwendet man als inerte Feststoffe Kaolin, Kreide, Kalziumsulfat, Bariumsulfat, Talkum, mikrokristalline Zellulose und/oder vernetzte Stärke. Bezüglich der Anwendbarkeit von Feststoffen bestehen - abgesehen davon, daß die Feststoffe inert und nicht hydrophobiert sein sollen - keine Einschränkungen. Man kann sowohl anorganische als auch organische oberflächlich unbehandelte Feststoffe verwenden, z.B. eignen sich außer den bereits genannten Feststoffen folgende: Schichtsilikate, wie Bentonit, Montmorillonit, Nontronit, Hectorit, Saponit, Volkonskoit, Sauconit, Beidellit, Allevardit, Illit, Halloysit, Attapulgit und Sepiolit sowie Titandioxid, Aluminiumoxid, Siliziumoxid, Satinweiß, synthetische Aluminiumsilikate, vernetzte Harnstoff-Formaldehyd und Melamin-Formaldehyd oder -isobutyraldehyd-Kondensate sowie Homo- und Copolymerisate des Styrols, die beispielsweise aus der GB-PS 1 229 503 bekannt sind. Harnstoff-Formaldehyd-Kondensate, die auch als Methylenharnstoffe bezeichnet werden, erhält man durch Kondensieren von Vorkondensaten aus Harnstoff und Formaldehyd im Molverhältnis von 1 oder weniger als 1 in Gegenwart von stark sauren Katalysatoren bei pH-Werten unterhalb von 2 (vgl. DE-AS 2 110 309) oder nach dem Verfahren der US-PS 3 931 063. Außerdem kommen die gemäß der DE-OS 25 47 966 erhältlichen Kondensationsprodukte in Betracht. Man kann Mischungen der anorganischen inerten Feststoffe, der organisch inerten Feststoffe sowie auch Mischungen aus anorganischen und organischen inerten Feststoffen einsetzen. Die organischen und anorganischen feinteiligen Feststoffe werden in nicht hydrophobierter Form verwendet und bedürfen daher keiner vorherigen Beschichtung bzw. Behandlung mit hydrophobierenden Stoffen.

Die Feststoffe werden vorzugsweise in einer Menge eingesetzt, daß 5 bis 30 % der Ölphase der Öl-in-Wasser-Emulsionen durch sie ersetzt sind.

Die Herstellung der erfindungsgemäßen Entschäumer erfolgt vorzugsweise so, daß man zunächst die feinteiligen inerten Feststoffe mit den Verbindungen (a) und/oder (b) und gegebenenfalls (c) homogenisiert und die dabei erhaltene Mischung anschließend in Wasser emulgiert. Die erfindungsgemäßen Entschäumer können auch dadurch hergestellt werden, daß man die feinteiligen inerten Feststoffe in einen bekannten Öl-in-Wasser-Entschäumer einemulgiert, z.B. in eine Emulsion der Verbindungen (a) und/oder (b) und gegebenenfalls (c) in Wasser. Sofern die organischen Verbindungen, die die Ölphase bilden, bei Raumtemperatur feste Stoffe darstellen, werden sie zunächst aufgeschmolzen. Man trägt dann in die Schmelze einen oder mehrere feinteilige inerte Feststoffe ein, wobei man für eine gute Durchmischung der Komponenten sorgt. Das Vermischen der Komponenten (a) bis (c) mit den inerten Feststoffen kann bei Temperaturen von 50 bis 100°C vorgenommen werden. Die dabei erhaltene Mischung wird dann zur Herstellung der Öl-in-Wasser-Emulsionen in Wasser emulgiert. Hierfür verwendet man die üblicherweise in Betracht kommenden grenzflächenaktiven Stoffe, die einen HLB-Wert von mehr als 6 haben. Es handelt sich bei diesen grenzflächenaktiven Stoffen um Öl-in-Wasser-Emulgatoren bzw. um typische Netzmittel. Von den grenzflächenaktiven Stoffen kann man anionische, kationische oder nichtionische Verbindungen verwenden. Bevorzugt werden anionische oder nichtionische bzw. Mischungen aus anionischen und nichtionischen grenzflächenaktiven Stoffen eingesetzt. Stoffe der genannten Art sind beispielsweise Natrium- oder Ammoniumsalze höherer Fettsäuren, wie Ammoniumoleat oder -stearat, oxalkylierte Alkylphenole, wie Nonylphenol oder Isooctylphenol, die im Molverhältnis 1:2 bis 5O mit Ethylenoxid umgesetzt sind, oxethylierte ungesättigte Öle, z.B. die Reaktionsprodukte aus 1 Mol Rizinusöl und 3O bis 4O Mol Ethylenoxid oder die Umsetzungsprodukte aus 1 Mol Spermölalkohol mit 6O bis 8O Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen. 1OO Gew.-Teile der Öl-in-Wasser-Emulsionen enthalten üblicherweise O,5 bis 5 Gew.-Teile eines Emulgators oder eines Emulgatorgemisches. Die Hauptmenge des Emulgators ist in der wäßrigen Phase gelöst. Außer den bereits genannten Emulgatoren kann man noch Schutzkolloide, wie hochmolekulare Polysaccharide und Seifen oder andere übliche Zusatzstoffe, wie Stabilisatoren, vgl. EP-Anmeldung 149 812, einsetzen. Das Einemulgieren der Ölphase (Mischung aus den Komponenten (a) bis (c) und den inerten Feststoffen) kann unter Verwendung handelsüblicher Vorrichtungen, z.B. Dispergatoren, erfolgen. Sofern die Ölphase als feste Masse vorliegen sollte, wird sie zunächst aufgeschmolzen und dann in Wasser einemulgiert. Das Einemulgieren der Ölphase in Wasser kann bei Raumtemperatur sowie auch bei höheren Temperaturen erfolgen, z.B. in dem Temperaturbereich von 5O bis 95°C.

Die Entschäumeremulsionen haben unmittelbar nach der Herstellung eine Viskosität in dem Bereich von 3OO bis 7OO mPa.s. Durch den Zusatz der inerten Feststoffe, die für sich allein nicht als Entschäumer wirksam sind, wird überraschenderweise die Wirksamkeit der Öl-in-Wasser-Emulsionen als Entschäumer praktisch nicht erniedrigt. Die Teilchengröße der inerten, wasserunlöslichen Feststoffe liegt immer unterhalb der Teilchengröße der Ölphase der Öl-in-Wasser-Emulsion und beträgt höchstens 95 % der Teilchengröße der jeweils verwendeten Öl-in-Wasser-Emulsion.

Die erfindungsgemäßen Öl-in-Wasser-Emulsionen werden als Entschäumer in schaumbildenden wäßrigen Systemen in einer solchen Menge eingesetzt, daß auf 1OO Gew.-Teile eines schaumbildenden Mediums etwa O,O2 bis O,5, vorzugsweise O,O5 bis O.3 Gew.-Teile der Entschäumer-Emulsion kommen. Die erfindungsgemäßen Entschäumer-Emulsionen werden insbesondere als Entschäumer bei der Herstellung von Papier verwendet, wobei sie sowohl bei der Sulfitzellstoffkochung als auch bei der Papierherstellung, dem Papierstoff und in Papierstreichfarben eingesetzt werden. Die Entschäumer können auch in der Nahrungsmittelindustrie, der Stärkeindustrie sowie in Kläranlagen bei der Schaumbekämpfung verwendet werden.

Die in den Beispielen angegebenen Teile sind Gewichtsteile, die Prozentangaben beziehen sich auf das Gewicht der Stoffe. Die mittlere Teilchengröße der in Wasser emulgierten Teilchen der Ölphase wurde mit Hilfe eines Coulter-Counters bestimmt, der Teilchendurchmesser der inerten Feststoffe war O,5 bis 15 μm.

Bestimmung des Schaumwertes:

In einer Rinne aus einem durchsichtigen Kunststoff werden jeweils 5 l einer schaumentwickelnden Papierstoffsuspension 5 Minuten umgepumpt. Die an der Oberfläche der Stoffsuspension gebildete Schaummenge wird dann mit Hilfe eines Rasters an der Wand der Rinne in Flächeneinheiten ($cm^2$) gemessen und als sogenannter Schaumwert zur Beurteilung der Wirksamkeit eines Entschäumers angegeben.

Pumpt man die Papierstoffsuspension in Abwesenheit eines Entschäumers um, so beträgt der Schaumwert nach 5 Minuten 1 2OO $cm^2$. Durch die Zugabe von jeweils 2 mg/l eines wirksamen Entschäumers zu der Papierstoffsuspension wird dieser Wert deutlich reduziert, so daß er ein Maß für die Wirksamkeit eines Entschäumers darstellt. Setzt man jedoch anstelle eines Entschäumers 2 mg/l eines nicht hydrophobisierten, inerten, feinteiligen (O,5 bis 15 μm) Feststoffs , z.B. Kaolin, $CaSO_4$, Talkum, Kreide, Bariumsulfat, vernetzte Stärke, $TiO_2$, Bentonit, $Al_2O_3$ oder $SiO_2$ zu, so ändert sich der Schaumwert nicht.

Beispiel 1

2O,5 Teile einer Mischung aus Glycerintriester von $C_{16}$- bis $C_{18}$-Fettsäuren, eines Fettalkoholgemisches von $C_{16}$- bis $C_{20}$-Alkoholen und Mineralöl im Gewichtsverhältnis 14 : 1O : 6 werden mit 1O Teilen Kaolin (mittlerer Teilchendurchmesser von mehr als 94 % der Teilchen unter 1 μm) bei einer Temperatur von 7O°C in einem gerührten Behälter gemischt. Diese Mischung wurde dann zu einer Lösung von 2 Teilen eines Emulgators (Anlagerungsprodukt von 25 Mol Ethylenoxid an 1 Mol Isooctylphenol, das mit Schwefelsäure zum Schwefelsäurehalbester umgesetzt ist) in 67,5 Teilen Wasser emulgiert. Zweckmäßigerweise legt man die wäßrige Phase in einem Dispergator vor und füllt die Kaolin enthaltende Ölphase zu. Man erhält eine Öl-in-Wasser-Emulsion, die bei einer Temperatur von 2O°C unmittelbar nach der Herstellung eine Viskosität von 45O mPa.s hat und bei der Prüfung der Entschäumungswirkung einen Schaumwert von 191 $cm^2$ ergibt. Die mittlere Teilchengröße der Ölphase beträgt 3 μm.

Vergleichsbeispiel 1

3O,5 Teile einer Ölphase aus Glycerintriester von $C_{16}$- bis $C_{18}$-Fettsäuren, eines Fettalkoholgemisches von $C_{16}$- bis $C_{20}$-Alkoholen und Mineralöl im Gewichtsverhältnis von 14 : 1O : 6 wird in 69,5 Teilen einer wäßrigen Phase 67,5 Teile Wasser und 2 Teile Emulgator (Anlagerungsprodukt von 25 Mol Ethylenoxid an 1 Mol Isooctylphenol, das mit Schwefelsäure zum Schwefelsäurehalbester umgesetzt ist) bei einer Temperatur von 7O°C in einem Dispergator emulgiert. Die mittlere Teilchengröße der Ölphase beträgt 3 μm. Bei der Prüfung der Wirksamkeit als Entschäumer wird ein Schaumwert von 189 $cm^2$ ermittelt.

Wie dieses Vergleichsbeispiel zeigt, wird die Wirksamkeit des Entschäumers gemäß Beispiel 1 durch den Gehalt an Kaolin überraschenderweise praktisch nicht erniedrigt.

Beispiel 2

15,5 Teile einer Mischung aus Glycerintriester von $C_{16}$- bis $C_{18}$-Fettsäuren, eines Fettalkoholgemisches von $C_{16}$- bis $C_{20}$-Alkoholen und Mineralöl im Gewichtsverhältnis 14 : 10 : 6 werden mit 15 Teilen Kaolin (mittlere Teilchengröße kleiner 1 μm für 94 % der Teilchen) bei einer Temperatur von 70°C gemischt und danach direkt in 69,5 Teile einer Lösung von 2 Teilen des in Beispiel 1 beschriebenen Emulgators in 67,5 Teilen Wasser emulgiert. Der mittlere Teilchendurchmesser der Ölphase der Öl-in-Wasser -Entschäumer-Emulsion beträgt 2,5 μm. Bei der Prüfung der Wirksamkeit der Emulsion als Entschäumer wird ein Schaumwert von 182 cm² ermittelt.

Beispiel 3

25,5 Teile eines Gemisches aus Glycerintriester von $C_{16}$- bis $C_{18}$-Fettsäuren, eines Fettalkoholgemisches von $C_{16}$- bis $C_{20}$-Alkoholen und Mineralöl im Gewichtsverhältnis 14 : 10 : 6 werden auf eine Temperatur von 70°C erwärmt und mit 5 Teilen einer feinteiligen Kreide (mittlerer Teilchendurchmesser kleiner 1 μm für 96 % der Teilchen) gemischt. Diese Mischung wird dann in 69,5 Teile einer wäßrigen Lösung einemulgiert, die 2 Teile des in Beispiel 1 beschriebenen Emulgators in 67,5 Teilen Wasser gelöst enthält. Man erhält eine Öl-in-Wasser-Emulsion mit einer mittleren Teilchengröße der Ölphase von 3,5 μm. Bei der Prüfung der Wirksamkeit als Entschäumer wird nach der oben beschriebenen Meßmethode ein Schaumwert von 194 cm² ermittelt.

Beispiel 4

15,5 Teile eines Gemisches aus Glycerintriester von $C_{16}$- bis $C_{18}$-Fettsäuren, eines Fettalkohlgemisches von $C_{16}$- bis $C_{20}$-Alkoholen und Mineralöl im Gewichtsverhältnis 14 : 10 : 6 werden auf eine Temperatur von 70°C erwärmt und mit 15 Teilen Kreide einer mittleren Teilchengröße von kleiner 1 μm für 96 % der Teilchen innig vermischt. Diese Mischung wird dann unmittelbar in 69,5 Teilen einer Lösung von 2 Teilen des in Beispiel 1 beschriebenen Emulgators in 67,5 Teilen Wasser emulgiert. Man erhält eine Öl-in-Wasser-Emulsion, deren mittlere Teilchengröße der Ölphase 3,5 μm beträgt. Bei der Prüfung der Wirksamkeit dieser Emulsion als Entschäumer nach dem oben beschriebenen Verfahren wird ein Schaumwert von 187 cm² erhalten.

Beispiel 5

15.5 Teile eines Gemisches aus Glycerintriester von $C_{16}$- bis $C_{18}$-Fettsäuren, eines Fettalkohlgemisches von $C_{16}$- bis $C_{20}$-Alkoholen und Mineralöl im Gewichtsverhältnis 14 : 10 : 6 werden auf eine Temperatur von 70 C erwärmt und mit 15 Teilen Kalziumsulfat einer mittleren Teilchengröße von 0,2 μm innig vermischt. Diese Mischung wird dann in 69,5 Teile einer wäßrigen Lösung einemulgiert, die 2 Teile des in Beispiel 1 beschriebenen Emulgators gelöst enthält. Es resultiert eine Öl-in-Wasser-Emulsion. deren mittlere Teilchengröße der Ölphase 3 μm

beträgt und die bei der Prüfung als Entschäumer nach der oben angegebenen Methode einen Schaumwert von 196 cm² ergibt.

Beispiel 6

15,5 Teile eines Gemisches aus Glycerintriester von $C_{16}$- bis $C_{18}$-Fettsäuren, eines Alkohlgemisches von $C_{16}$- bis $C_{18}$-Alkoholen und Mineralöl im Gewichtsverhältnis 14 : 10 : 6 werden auf eine Temperatur von 80°C erwärmt und mit 15 Teilen Talkum einer mittleren Teilchengröße von 0,5 μm innig vermischt. Diese Mischung wird dann in 69,5 Teilen einer wäßrigen Lösung emulgiert, die 2 Teile des in Beispiel 1 beschriebenen Emulgators gelöst enthält. Es resultiert eine Öl-in-Wasser-Emulsion, deren Ölphase eine mittlere Teilchengröße von 3 μm hat, und die bei der Prüfung als Entschäumer nach dem oben beschriebenen Verfahren einen Schaumwert von 186 cm² ergibt.

Beispiel 7

15,5 Teile einer Mischung aus Glycerin Triester von $C_{16}$-$C_{18}$-Fettsäuren, eines Fettalkoholgemisches von $C_{16}$-$C_{20}$-Alkoholen und Mineralöl im Gewichtsverhältnis 14 : 10 : 6 werden auf eine Temperatur von 70°C erwärmt und mit 15 Teilen einer microkristallinen Zellulose, deren mittleren Teilchengröße unterhalb von 1 μm liegt, innig vermischt. Diese Mischung wird dann in 69,5 Teilen einer wäßrigen Lösung emulgiert, die 2 Teile des in Beispiel 1 beschriebenen Emulgators enthält. Dabei resultiert eine Öl-in-Wasser-Emulsion, deren Ölphase eine Teilchengröße von 4 μm hat, und die bei der Prüfung der Wirksamkeit als Entschäumer nach dem oben beschriebenen Verfahren einen Schaumwert von 200 cm² ergibt.

Beispiel 8

15,5 Teile einer Mischung aus Glycerintriester von $C_{16}$-$C_{18}$-Fettsäuren, eines Fettalkoholgemisches von $C_{16}$-$C_{20}$-Alkoholen und Mineralöl im Gewichtsverhältnis von 14 : 10 : 6 werden auf eine Temperatur von 80°C erwärmt und mit 15 Teilen einer handelsüblichen vernetzten Stärke, deren mittlere Teilchengröße unterhalb von 5 μm liegt, homogenisiert. Die so erhaltene Mischung wird dann in 69,5 Teile einer wäßrigen Lösung emulgiert, die 2 Gew.-Teile des in Beispiel 1 beschriebenen Emulgators gelöst enthält. Man erhält eine Öl-in-Wasser-Emulsion mit einer Teilchengröße der Ölphase von 8 μm. Bei der Prüfung der Wirksamkeit als Entschäumer wird für diese Emulsion ein Schaumwert von 179 cm² ermittelt.

Beispiel 9

Zu 100 Teilen einer Emulsion aus 30 Teilen einer Mischung aus Glycerintriester von $C_{16}$-$C_{18}$-Fettsäuren, eines Fettalkoholgemisches von $C_{16}$-$C_{20}$-Alkoholen und Mineralöl im Gewichtsverhältnis von 14:10:6 in 70 Teilen Wasser, das 2 Gewichtsteile des im Beispiel 1 beschriebenen Emulgators gelöst enthält, werden bei einer Temperatur von 30°C 3 Teile Kaolin (Teilchendurchmesser < 1 μm für 94 % der Teilchen) gegeben und in einem Dispergator damit homogenisiert. Die Teilchengröße der Ölphase der so erhaltenen Emulsion beträgt 6 μm. Die Emulsion ergibt bei der obenbeschriebenen Prüfung einen Schaumwert von 184 cm².

Beispiel 10

Beispiel 9 wird mit der Ausnahme wiederholt. daß man anstelle von 3 nunmehr 12 Teile Koalin der angegebenen Spezifikation zusetzt. Man erhält eine Entschäumeremulsion. deren Ölphase eine Teilchengröße von 6 μm hat. und die bei der Prüfung gemäß der oben angegebenen Vorschrift einen Schaumwert von 186 cm² ergibt.

**Patentansprüche**

1. Entschäumer auf Basis von Öl-in-Wasser-Emulsionen, bei denen die Ölphase der Emulsionen

(a) einen $C_{12}$- bis $C_{26}$-Alkohol, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind und/oder

(b) einen Fettsäureester von $C_{12}$- bis $C_{22}$-Carbonsäuren mit einem ein- bis dreiwertigen $C_1$- bis $C_{18}$-Alkohol und gegebenenfalls

(c) einen Kohlenwasserstoff mit einem Siedepunkt oberhalb von 200°C oder Fettsäuren mit 12 bis 22 Kohlenstoffatomen

enthält, zu 5 bis 50 Gew.% am Aufbau der Emulsion beteiligt ist und eine mittlere Teilchengröße von < 25 μm hat, dadurch gekennzeichnet, daß die Öl-in-Wasser-Emulsionen oberflächlich nicht hydrophobierte, feinteilige, praktische wasserunlösliche, inerte Feststoffe enthalten.

2. Entschäumer nach Anspruch 1, dadurch gekennzeichnet, daß die nicht-wäßrigen Bestandteile der Öl-in-Wasser-Emulsion aus 50 bis 99,9 Gew.-% der Ölphase und 50 bis 0,1 Gew.-% aus oberflächlich nicht hydrophobierten, feinteiligen, praktisch wasserunlöslichen, inerten Feststoffen eines Teilchendurchmessers von < 20 μm bestehen.

3. Entschäumer nach den Ansprüchen 1 und 2. dadurch gekennzeichnet, daß als oberflächlich nicht hydrophobierte, feinteilige, praktisch wasserunlösliche, inerte Feststoffe Kaolin, Schichtsilikate. Kreide, Kalziumsulfat, Bariumsulfat, Talkum. Titandioxid, Aluminiumoxid, Siliziumdioxid. Satinweiß, mikrokristalline Cellulose. Harnstoff- und Melamin-Formaldehyd-Pigmente und/oder vernetzte Stärke oder ihre Mischungen eingesetzt werden.

4. Verfahren zur Herstellung der Entschäumer nach den Ansprüchen 1 bis 3. dadurch gekennzeichnet. daß man die oberflächlich nicht hydrophobierten, feinteiligen, inerten Feststoffe zunächst mit den Verbindungen (a) und/oder (b) und gegebenenfalls (c) homogenisiert und die Mischung anschließend in Wasser emulgiert.

5. Verfahren zur Herstellung der Entschäumer nach den Ansprüchen 1 bis 3, dadurch gekennzeichnet, daß man die oberflächlich nicht hydrophobierten, feinteiligen inerten Feststoffe in eine Emulsion der Verbindungen (a) und/oder (b) und gegebenenfalls (c) in Wasser einemulgiert.

6. Verwendung der gemäß den Ansprüchen 4 und 5 hergestellten Öl-in-Wasser-Emulsionen als Entschäumer bei der Herstellung von Papier.